# EUROPEAN PATENT SPECIFICATION

(11) **EP 1 076 872 B1**
(45) Date of publication and mention of the grant of the patent: **06.11.2002**
(21) Application number: 99944137.1
(22) Date of filing: 05.03.1999
(51) Int. Cl.: G06F 17/60

(54) **METHOD AND APPARATUS FOR COLLECTING INFORMATION ASSOCIATED WITH MOVEMENT BETWEEN LOCATIONS**
VERFAHREN UND VORRICHTUNG ZUM SAMMELN VON INFORMATIONEN ÜBER BEWEGUNGEN ZWISCHEN MEHREREN STELLEN
TECHNIQUE DE COLLECTE D'INFORMATION ASSOCIEE A UN MOUVEMENT ENTRE EMPLACEMENTS ET APPAREIL CORRESPONDANT

(30) Priority: 03.04.1998 US 54924
(43) Date of publication of application: 21.02.2001
(73) Proprietor: International Business Machines Corporation, Armonk, NY 10504 (US)
(72) Inventor: DYER, Joan G., New York, NY 10024 (US); GOLDMAN, Kenneth, Alan, Norwalk, CT 06850 (US); PALMER, Elaine Rivette, New York, NY 10526 (US); ROHATGI, Pankaj, New York, NY 10598 (US); SMITH, Sean William, New York, NY 12518 (US)
(74) Representative: Moss, Robert Douglas
(86) International application number: GB9900659
(87) International publication number: WO99052052

(56) References cited:
- EP-A- 0 649 109
- EP-A- 0 742 524
- WO-A-95/21428
- WO-A-97/44750
- WO-A-98/38589
- FR-A- 2 682 502
- US-A- 5 056 019
- PATENT ABSTRACTS OF JAPAN vol. 096, no. 011, 29 November 1996 & JP 08 190672 A (HITACHI LTD;HITACHI COMPUT ENG CORP LTD), 23 July 1996

## Description

The present invention relates to information associated with movement between locations and more particularly the collection of that information. In embodiments of the invention described herein, cards interact with promotional units to collect information associated with card movement between locations.

Individuals exhibit various types of behaviour. In some situations, it may be useful to collect information associated with that behaviour.

In a retail scenario, for example, shoppers choose to purchase (or not to purchase) various products. As the shopper selects various items for purchase, the shopper is exhibiting what is referred to as shopper behaviour.

In many current retail scenarios, shoppers are provided with a physical token to identify them, to encourage various shopping activities, and to provide a mechanism for an administrating party to collect information regarding shopper behaviour. One particular example of this is disclosed in FR-A-2682502.

Many grocery stores now provide their customers with "frequent shopper" cards. Each card allows a customer to be identified with a unique identification code which may be stored on the card in the form of a bar-code or a magnetic stripe, for example. The store then provides various discounts when a customer presents his/her card at the check-out line. Customer-specific data associated with the card can be provided via a network from the check-out line to a central computer.

As another example, many shopping complexes provide a parking validation service. Customers receive a ticket when they park their car. Customers who have this ticket validated at a participating store in the complex may have their parking fee reduced or eliminated.

In each of these examples, marketing information may be obtained. For example, the administrating party can compare a customer's current purchases with a customer's previous purchases. The administrating party can then determine whether a product discount (or advertisement of the product discount) resulted in the product purchase. Furthermore, when such a scheme is used in a variety of stores, this technique provides an indication of relative store popularity.

In a rather different application WO-97-44750-A discloses a customer tracking and recognition program that encompasses customers' gaming and non-gaming activity at a plurality of affiliated casino properties.

These schemes, however, suffer from several limitations.

Shopper promotions may be limited as well as difficult to use. For example, finding "discount" tags on the shelves of modern grocery stores may be an overly burdensome task.

Furthermore, opportunities for demographic data collection are limited to actions of shoppers which are truly affirmative. Thus, for example, it is possible to identify at which store a customer redeemed his/her parking coupon. Furthermore, it is possible to identify which discounted products were actually purchased by the individual. Other valuable data may not be obtainable by this technique. For example, using this technique, it is difficult to identify which discounts the shopper considered but discarded. it is also difficult to identify which promotions the shopper walked by without noticing. The actual route of the customer through the store is also difficult to obtain.

In accordance with the present invention, there is now provided a system for collecting information associated with movement between locations, comprising: a plurality of individual cards, each of said individual cards including: a respective storage area; and a respective interactor for receiving promotional unit data and for transferring said received promotional unit data to said respective storage area as a respective one of said cards moves between locations; a plurality of promotional units, each transmitting respective promotional unit data to any of said cards, said respective promotional unit data one of a) transmitted by said respective one of said promotional units, and b) received by any one of said cards, when said any one of said cards and said respective one of said promotional units are in proximity for communications between them to occur; and an administrative unit for receiving all of said promotional unit data situated in said respective storage area of any one of said cards.

Viewing the present invention from another aspect, there is now provided a method for collecting information associated with movement between locations having respective promotional units, said method comprising the steps of: providing a plurality of individual cards each having a respective storage area to a respective plurality of individuals; having any one of said promotional units provide respective promotional unit data to any one of said cards which interacts therewith and storing said respective promotional unit data in said respective storage area of said respective one of said cards; and receiving said respective promotional unit data from respective ones of said cards.

viewing the present invention from yet another aspect, there is now provided a system for collecting information associated with movement of shoppers between locations in a retail complex, comprising: a plurality of individual cards, each of said individual cards corresponding to a respective one of said shoppers, each of said cards including: a respective storage area; and a respective interactor for receiving promotional unit data and for transferring said received promotional unit data to said respective storage area as a respective one of said shoppers moves their respective card between locations; a plurality of promotional units, each transmitting respective promotional unit data to any of said cards, said respective promotional unit data one of a) transmitted by said respective one of said promotional units, and b) received by any one of said cards, when said any one of said cards and said respective one of said promotional units are brought in proximity by one of said shoppers for communications between them to occur; and an administrative unit for receiving all of said promotional unit data situated in said respective storage area of any one of said cards.

Viewing the present invention from a further aspect, that is now provided a method for collecting information associated with movement of shoppers between locations in a retail complex, said locations having respective promotional units, said method comprising the steps of: providing a plurality of individual cards each having a respective storage area to said shoppers; having any one of said promotional units provide respective promotional unit data to any one of said cards which said shoppers cause to interact therewith as said shoppers move through said retail complex and storing said respective promotional unit data in said respective storage area of said respective one of said cards; and receiving said respective promotional unit data from respective ones of said cards.

Viewing the present invention from another aspect, there is now provided an article of manufacture comprising a computer usable medium having computer readable program code means embodied therein for collecting information associated with movement between locations having respective promotional units, the computer readable program code means in said article of manufacture comprising computer readable program code means for causing a computer to effect: providing a plurality of individual cards each having a respective storage area to a respective plurality of individuals; having any one of said promotional units provide respective promotional unit data to any one of said cards which interacts therewith and storing said respective promotional unit data in said respective storage area of said respective one of said cards; and receiving said respective promotional unit data from respective ones of said cards.

Viewing the present invention from yet another aspect, there is now provided a program storage device readable by machine, tangibly embodying a program of instructions executable by the machine to perform method steps for collecting information associated with movement of shoppers between locations in a retail complex, said locations having respective promotional units, said method comprising the steps of: providing a plurality of individual cards each having a respective storage area to said shoppers; having any one of said promotional units provide respective promotional unit data to any one of said cards which said shoppers cause to interact therewith as said shoppers move through said retail complex and storing said respective promotional unit data in said respective storage area of said respective one of said cards; and receiving said respective promotional unit data from respective ones of said cards.

viewing the present invention from a further aspect, there is now a computer program product as recited in claim 44, wherein said information obtained corresponds to products acquired and not acquired by said shoppers.

In a preferred embodiment of the present invention, a system collects information associated with movement between locations. The system includes individual cards. Each individual card has a storage area and a interactor for receiving promotional unit data. A plurality of promotional units are also included. Each promotional unit transmits respective promotional unit data to any card with which it interacts. The data within each card may then be downloaded to determine with which promotional units interaction has occurred.
Preferred embodiments of the present invention will now be described, by way of example only, with reference to the accompanying drawings, in which:
Figure 1 is a block diagram of a first exemplary embodiment of the present invention (an optional aspect of this first exemplary embodiment is also shown);
Figure 2 is a block diagram of a second exemplary embodiment of the present invention. An optional aspect of this second exemplary embodiment is also shown.
Figure 3 is a flowchart diagram which is useful for explaining operation of an exemplary embodiment of the present invention;
Figure 4 is a further flowchart diagram which is also useful for explaining operation of an exemplary embodiment of the present invention; and
Figure 5 is a block diagram of a further exemplary embodiment of the present invention. This exemplary embodiment may also include several optional aspects.

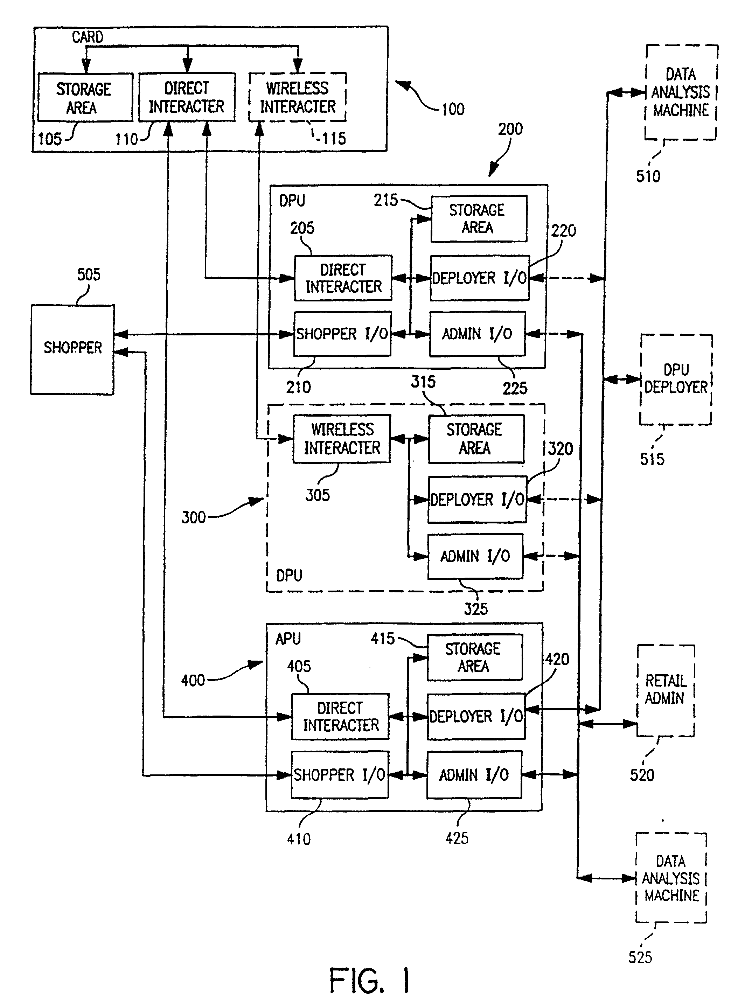

A first exemplary embodiment of the present invention is illustrated in Figure 1. Optional aspects of this embodiments are also shown in Figure 1. As shown, Figure 1 includes individual card 100, promotional unit 200, and administrative unit 400. Typically, multiple individual cards, promotional units and administrative units may be used. Each promotional unit may be situated, for example, in a different location within a retail complex. An individual 505 carriers his/her individual card 100 as he/she goes from place to place within the retail complex. Individual 505 may be a person (such as a shopper) who is shopping in the retail complex. Each time individual card 100 interacts with any of the promotional units 200 within the retail complex, the promotional unit 200 transmits promotional unit data to individual card 100. Promotional unit data may be, for example, a code uniquely identifying the promotional unit 200 which is interacting with individual card 100. Alternatively, promotional unit data may serve as some other form of identification, such as identifying a product, a group of products, a particular location in a store, a generalized location in a store, etc. As individual 505 continues to move through the retail complex and causes his/her individual card 100 to interact with various promotional units 200, individual card 100 stores the promotional unit data it has received. This may include, for example, building a list corresponding to all the promotional units with which it has interacted. At a later time, for example when individual 505 exits the retail complex, the promotional unit data which has been stored within individual card 100 may be retrieved. In this way, it is possible to determine where, for example, the individual went while he/she was within the retail complex.

Individual card 100 includes storage area 105 and one (or more) direct interactor 110. Direct interactor 110 may possess active computational ability. Thus, direct interactor 110 can conduct (potentially) complicated exchanges over direct electrical connections. Individual card 100 may be, for example, a standard integrated circuit (IC) chip card. This is also referred to as a "smart card." Illustrative smart cards are described, for example, in ISO/IEC 10536-1: 1992 Identification Cards-Contactless Integrated circuit(s) Cards - Part 1: Physical Characteristics, ISO/IEC 10536-2: 1995 Identification Cards - Contactless Integrated circuit(s) Cards - Part 2: Dimensions and Location of Coupling Areas, and ISO/IEC 10536-3: 1996 Identification Cards - Contactless Integrated Circuit(s) Cards - Part 3: Electronic Signals and Reset Procedures. Furthermore, an exemplary shopper card may be an IBM MFC 4.0 card manufactured by IBM Corporation. Storage area 105 may be implemented by internal EEPROM.

Promotional unit 200 may be a stand alone external device which interacts with individual card 100. Alternatively, several promotional units 200 may be networked together.

Promotional unit 200 may include direct interactor 205. Direct interactor 205 enables promotional unit 200 to communicate with direct interactor 110 which is included in individual card 100.

Shopper I/O 210 may be a sound or visual device for communicating within individual 505. Thus, for example, shopper I/O 210 may prompt individual 505 to place his/her individual card 100 within proximity to promotional unit 200 so that communication between individual card 100 and promotional unit 200 may occur. Shopper I/O 210 may also suggest that a shopper go to certain physical locations, or may be used for product or incentive advertising.

Storage area 215 is also included in promotional unit 200. Storage area 215 may be used for a variety of storage purposes. Storage area 215 may be used for storing the program code which enables operation of promotional unit 200. Storage area 215 may optionally contain state variables which are modified based on certain interactions (or numbers of interactions) with individual cards 100. Thus, for example, a state variable assuming a certain state may trigger monetary incentives (i.e., discounts, bonuses, etc.) for individual 505. Storage area 215 may optionally contain logs of interactions with individual cards 100 which have occurred.

Deployer I/O 220 is included. Deployer I/O 220 enables programming of promotional unit 200. Thus, for example, promotional unit 200 can be programmed to interact with individual cards 100 in a variety of different ways. For example, shopper I/O 210 may provide different prompts to individual 505. Promotional unit 200 may provide different bonuses to different individual cards 100 based on which individual card 100 (or the number of individual cards 100) that have interacted with promotional unit 200.

As previously stated, storage area 215 may include state variables which are modified based upon the interactions with individual cards 100. Furthermore, promotional unit 200 may provide different bonuses to individual card 100 based on factors such as the time of interaction, the day of interaction, the date of interaction, etc. As can be seen, there are many ways for promotional unit 200 to interact with individual card 100. Deployer I/O 220 provides a means to program promotional unit 200 in the manner in which it should interact with individual cards 100.

Optionally, if promotional unit 200 is recording interactions with individual cards 100, then deployer I/O 220 permits a record of these interactions to be retrieved from promotional unit 200. Retrieval may be accomplished, for example, by temporarily attaching a stand-alone device to deployer I/O 220 or by having deployer I/O 220 permanently wired to an appropriate node.

Admin I/O 225 is also included. Admin I/O 225 is similar in operation to deployer I/O 220. One difference between these two devices is who is using them. For example, promotional unit 200 may have been placed in the retail complex by an outside company such as a marketing firm or a product manufacturer. These parties are referred to as "deployers." The data which is obtained by promotional units 200 and individual cards 100 may be useful to the entity actually selling the product to the consumer. This entity is referred to as the "administrator." Thus, the deployer and the administrator may each want to be able to program promotional unit 200. The deployer and the administrator may also each want to obtain information from promotional unit 200. Thus, a separate I/O channel is optionally provided so that each entity may perform the programming and obtain the information which each entity respectively desires. These I/O channels may be physically separate or logically separate (and thus physically shared).

Promotional unit 200 may also include, for example, a separate display for advertising and logos.

Administrative unit 400 is also included. Administrative unit 400 is similar to promotional unit 200. Multiple administrative units 400 may be networked together. Each administrative unit 400 interacts with individual card 100 in several roles, including (but not limited to) issuing each individual card to respective individuals (i.e., printing or programming cards), dispensing cards to individuals as they enter a store, receiving information from individual cards upon each individual exiting from a store (exit units), and collecting cards as individuals exit (from a store).

Data analysis machine 525 is also included. Data analysis machine 525 may perform one (or more) of several functions, including the collection, correlation, and analysis of data from promotional unit 200 and administrative unit 400. Thus, data analysis machine 525 may perform what is referred to as "data mining". As defined by Gardner, C. IBM Data Mining Technology, "Data mining is the process of extracting valid, previously unknown, and ultimately comprehensible information from large databases and using it to make crucial business decisions." Data analysis machine 525 may be, for example, a standard computer workstation, running special purpose data mining software. Data analysis machine 525 may correlate the information obtained by admin I/O 225 and/or admin I/O 425 with other information obtained, for example, directly from individual 505 or through point-of-sale devices. This enables, for example, a comparison of a) the items associated with promotional units 200 which, in turn, interacted with individual card 100 with b) the actual items acquired (or purchased) by individual 505.

Promotional unit 200 and administrative unit 400 may each be built around a smart card reader. Two possible considerations for promotional unit 200 and administrative unit 400 are a) whether these units are wireless or direct interface, and b) whether these units are stand alone or coupled together. Exemplary smart card readers include IBM 5948B02 (direct, coupled), IBM 5948B03 (direct, stand alone), GEMPlus GCR500 (direct, stand alone), GEMPlus GCR400-FD (direct, coupled), GEMPlus GC1680 (wireless, coupled). Implementation of smart card readers are also described in Organisation-International Electrotechnical Commission (ISO/IEC) 14443 Contactless Integrated Circuit Card Standard.

Depending upon a desired complexity of promotional unit 200 and administrative unit 400, either a stand alone smart card reader as described above may be used or a smart card reader coupled, for example, to an IBM PC may be used. Current "point-of-sale" devices currently available may be suitable with modifications which would be understood to one of ordinary skill in the art.

Data analysis machine 525 may be, for example, an IBM OS-390 or AS/400 machine running software such as IBM Intelligent Miner.

An example application of the present invention is to enable collection and analysis of data on individual behaviour. Machine 525 enables this analysis. Thus, machine 525 enables the administrator, for example, to process the records that they download from individual cards 100. This information may be correlated with the data gathered, for example, from a "point-of-sale" device or from a shopper directly.
various options may permit the creation of data records that may be owned (or purchased) by deployers. Thus, the promotional units may store records that may be downloaded, occasionally, using, for example, FLASH memory cards. In any event, data analysis machine 510 may optionally be included. Data analysis machine 510 enables the deployer to provide data mining as appropriate.

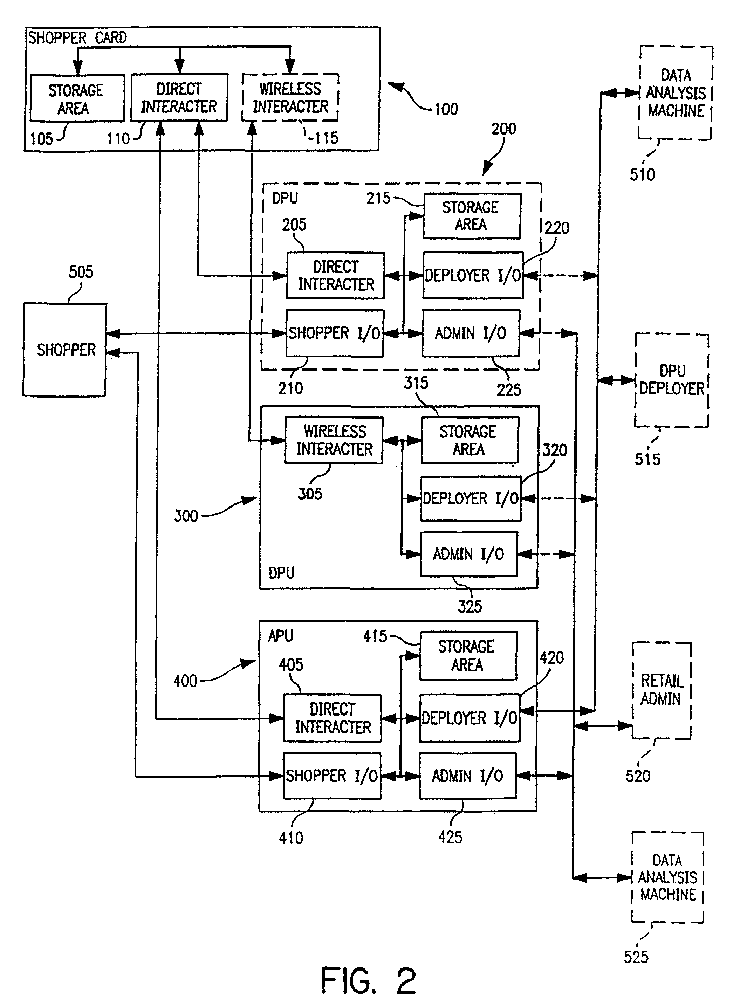

A further exemplary embodiment of the present invention is shown in Figure 2. Figure 2 differs from Figure 1 in that Figure 2 shows promotional unit 300 as a preferred aspect of this embodiment.
Promotional unit 300 includes wireless interactor 305. Wireless interactor 305 is able to communicate with storage area 315, deployer I/O 320, and admin I/O 325. Other than wireless interactor 305, the other components shown in Figure 2 associated with promotional unit 300 are similar to those found within promotional unit 200. Because promotional unit 300 includes wireless interactor 305, individual card 100 preferably includes wireless interactor 115. Thus, wireless interactor 305 and wireless interactor 115 may communicate with each other when wireless interactor 115 and wireless interactor 305 are within sufficient proximity for communication to occur.

Administrative unit 400 may optionally include a wireless interactor. This wireless interactor may interact with individual card 100 when individual card 100 and administrative unit 400 are within sufficient proximity for the two to communicate.

As shown in Figure 1, although the use of promotional unit 200 is preferred, the use of promotional unit 300 may optionally also be included. Also, as shown in Figure 2, although the use of promotional unit 300 is preferred, the use of promotional unit 200 is also optionally included.

In an exemplary embodiment of the present invention, a customer enters a retail complex (i.e., store) with his individual card 100 (e.g., the customer's "smart card"). The card was previously dispensed to the customer and was encoded so that it uniquely identifies that customer. The customer moves around the store. As the customer moves, his individual card 100 interacts with various promotional units 200 or promotional units 300 situated about the store. Displays or inducements such as discounts, rebates, "points" toward some prize, etc. may be used to encourage the customer to interact with promotional units 200. Interaction with promotional units 300 occurs when the customer's individual card 100 is within sufficient physical proximity to a promotional unit 300 for the card and the promotional unit to communicate. Each promotional unit 200, 300, which interacts with individual card 100, transmits promotional unit data (e.g., a unique code) to promotional units 200, 300. in this way, individual card 100 is able to maintain, for example, a record of each promotional unit with which it has had interaction. Individual card 100 may maintain other information, as well, such as the times when each interaction occurred. Furthermore, promotional unit data may represent other information such as products, manufacturers, store location, etc. Individual card 100 may also maintain state variables that are modified by certain interactions (or certain numbers of interactions). Modification of certain variables may indicate that awards (rebates, discounts, prizes, etc.) are due the customer. When the customer leaves the store, administrative unit 400 reads the contents of the customer's individual card 100. Individual card 100 may also be initialized at that time. By thus reading the contents of the customer's individual card 100, it is possible to obtain, for example, a list of all the promotional units 200, 300 which interacted with individual card 100 or, what products, types of products, store location, etc. the customer considered.

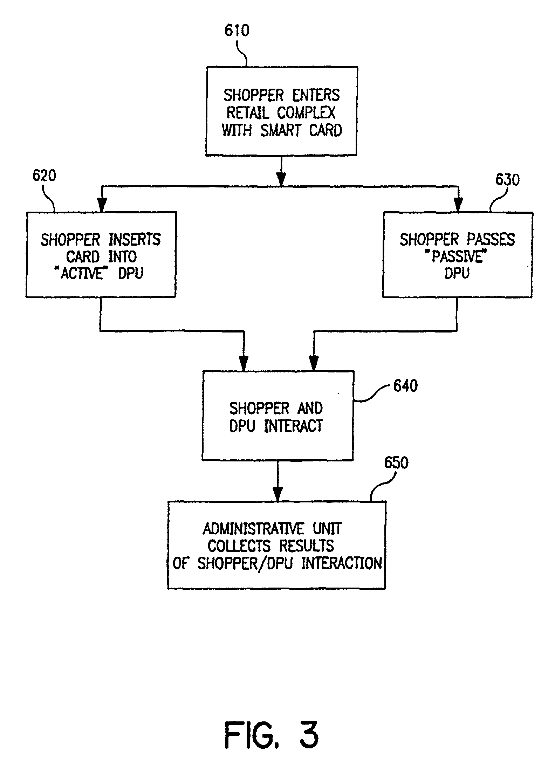

Operation of an exemplary embodiment of the present invention is illustrated with the flow chart diagram included in Figure 3. As shown at step 610, an individual (e.g., shopper) enters a complex (i.e., a retail complex) with a card. At step 620, the shopper inserts the card into an "active" promotional unit. Alternatively, at step 630, the shopper passes a "passive" promotional unit. At step 640, the card and the promotional unit being used interact. As shown, step 620-640 may be repeated. Finally, at step 650, the administrative unit collects results of shopper/promotional unit interaction.

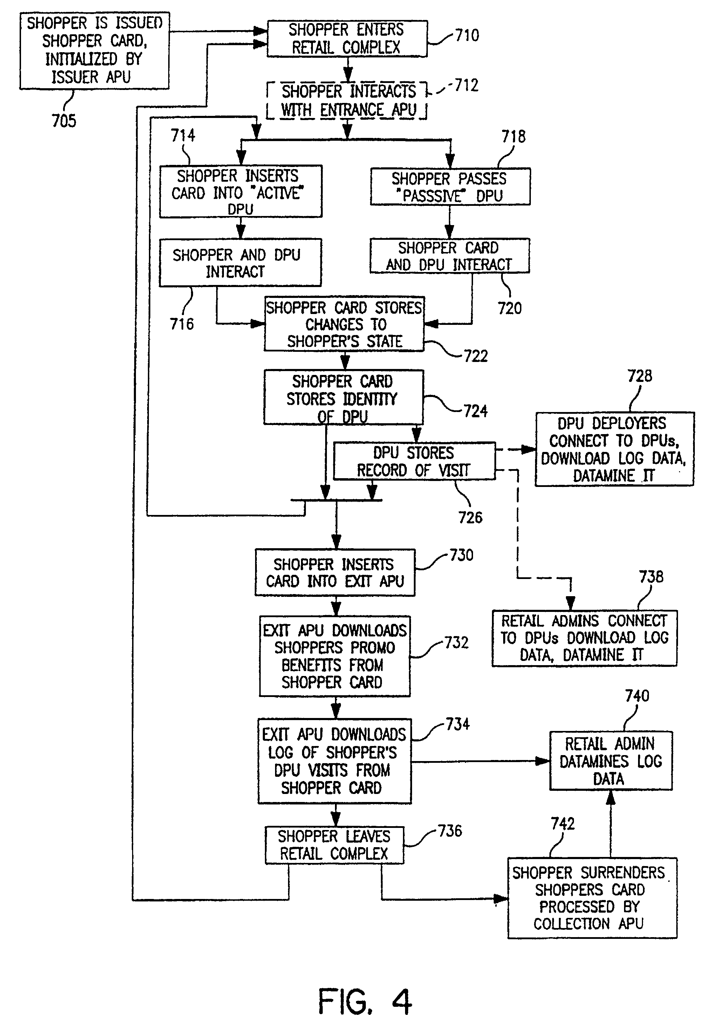

A further exemplary embodiment of the present invention is shown in the flow chart diagram which appears in Figure 4. At step 705, a shopper is issued individual card 100. individual card 100 is initialized by administrative unit 400 which issues shopping cards. At step 710, the shopper enters a retail complex. At step 712, the shopper may interact with administrative unit 400 (same or different from administrative unit 400 which issued individual card 100) located at the entrance. The shopper will then interact with zero or more promotional units 200, 300. At step 714, for example, the shopper inserts his/her card into "active" promotional unit 200. The shopper and promotional unit 200 then interact at step 716. Alternatively, at step 718, the shopper passes a "passive" promotional unit 300. At step 720, the shopper card and promotional unit 200, 300 then interact.

When card 100 and promotional unit 200, 300 interact, sufficient data passes from promotional units 200, 300 to card 100 so that the card has a record of interaction with a particular promotional unit (optionally at a certain time). Thus, each promotional unit 200, 300 may have unique promotional unit data (i.e., a unique identifier). This data is transmitted to card 100 when card 100 and promotional units 200, 300 interact.

The data stored on card 100 may be accessible to other promotional units 200, 300. Thus, a promotional unit 200, 300 can interact with card 100 differently depending upon the data stored on card 100. Different data may cause, for example, codes corresponding to different promotions to be stored on card 100 for later redemption. Alternatively, the shopper could be prompted to change his/her behaviour (e.g., look at a competitor's product or pricing, go to a different part of the store, offer a promotion based on the time period which had elapsed since a previous identifier had been stored, etc.).

At step 722, state variables within individual card 100 may also be modified as the result of interactions within certain promotional units 200, 300. These variables, when modified, may indicate for example that the customer is entitled to discounts, rebates, prices, etc.

At step 724, as each promotional unit 200, 300 transmits unique promotional unit data, individual card 100 stores some or all of the promotional unit data that it receives. The respective times at which promotional unit data is stored in cards may also be stored.

Processing may then proceed, for example, in one of three ways.

in a first example, processing continues with either step 714 or step 718 as the shopper continues to move through the retail complex.
In another example, at step 726, administrative unit 400 stores a record of the shopper's visit. At step 728, promotional unit deployer 515 then connects to one or more administrative units 400, downloads data, and data mines this data. Alternatively, retail admin 520 may connect to promotional units 200, 300, downloads logged data, and data mines this data.

As a further example, at step 730, the shopper may insert his/her card into an exit administrative unit 400. At step 732, exit administrative unit 400 downloads promotional benefits into, for example, individual card 100 or a point-of-sale device. At step 734, administrative unit 400 downloads a log of the shopper's promotional unit visit from individual card 100. Retail admin 520 may then log this data at step 740. At step 736, the shopper leaves the retail complex. At step 742, the shopper surrenders the individual card 100 which is processed by a collection administrative unit. Processing may then, again, proceed to step 740 for data mining of logged data by retail admin 520. The shopper may then enter another retail complex at step 710, if desired.

Promotional unit interactions may change shopper-specific promotional benefits stored in the shopper card. The card and/or the promotional unit may also record a log of the time and nature of the visit.

The purpose for the shopper may be to obtain a "better deal." This may be accomplished, for example, by accruing promotional benefits. The purpose for the deployers (e.g., the company that owns administrative units 200, 300, however, is to increase revenue and to gather data on shopper behaviour. This may be accomplished, for example, for better marketing. To this end, both the deployer and the retail administrators (e.g., retail store management) may wish to collect the logged data. This may be collected from individual cards 100, or from promotional units 200, 300. This may be accomplished, for example, by a network connection to an exit administrative unit, by the various promotional units being networked together, or by occasional connections to the promotional units using an appropriate portable device.

A further exemplary embodiment of this invention may include the use of a grocery store "frequent shopper" card.

In the example above, the retail administrator is the store itself. The store may place "passive" promotional units 300 at various points in the store to monitor customer movement. "Active" promotional units 200 may be leased, for example, to food-item vendors.

"Active" promotional units 200, optionally, may display some type of discount. The interactions may be personalized to make interactions more attractive for the customer. The interactions can also depend on other variables, such as time of day or day of week.

Interaction could also be non-deterministic. Thus, discounts or other inducements may be provided randomly or a certain percentage of the time. Non-tangible inducements such as "points" could be accumulated and redeemed.

Optionally, the store could use interactions to attempt to direct the customer (with audio or visual messages, for example) to other points in the store.

An "active" promotional unit 200 could be combined with a "passive" promotional unit 300. Thus, an audible or visual signal may be provided to customer when a customer walks by to encourage the customer to insert his/her card.

Promotional units may be placed in a variety of stores.

Another exemplary embodiment of the present invention relates to the use of tickets issued in parking garages. For example, the retail administrator may issue individual card 100 when the shopper enters the parking garage and may collect individual card 100 upon exit. A customer can activate a promotional unit 200, 300 with his/her individual card 100, thus triggering an interaction which could include, for example, a validation, as well as other special offers.

Administrative units (or point-of-sale devices) 400 at individual stores may download demographic and benefits data. This example permits aggressive competition. For example, a small locally owned book store may advertise that they will give a discount to visitors to a national chain who then come to their store.

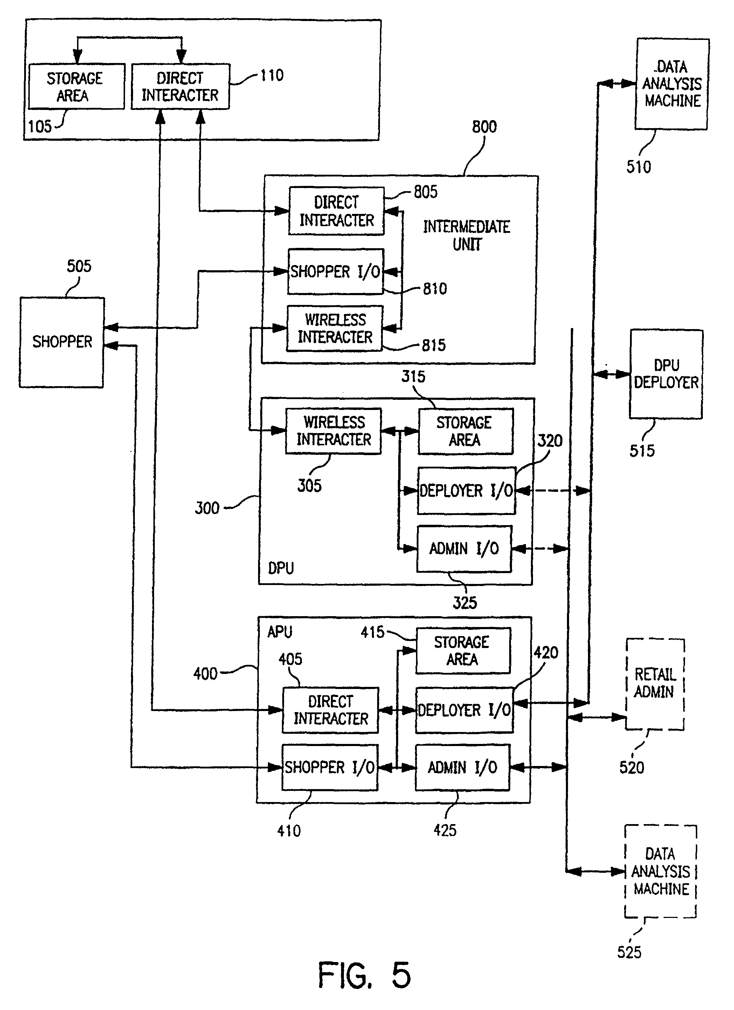

A further exemplary embodiment of the present invention is shown in Figure 5. This exemplary embodiment may be useful in situations where excessive interactions between the smart card and the promotional units may be occurring. Thus, for example, to cause an active interaction, a shopper may desirably physically insert his/her individual card 100 into various promotional units 200 attached to various shelves. During rush hours, however, shoppers may not interact with promotional units 200 which are currently in use by another shopper.

One solution to this problem is to introduce intermediate unit 800. Intermediate unit 800 may be obtained from shoppers at the entrance. Intermediate unit 800 may be personalized by inserting individual card 100 therein, and leaving the intermediate unit 800 with the retail store upon exit. This intermediate unit 800 could absorb some of the more complex tasks of the shopper card (e.g., wireless interaction) and some of the "bottlenecks" of promotional units, such as customer I/O.

For example, intermediate unit 800 may be a smart card reader with RF communication, mounting on a shopping cart. The shopper inserts his/her individual card 100 in the reader and begins the process of shopping. when the shopper walks by a store shelf, the card reader communicates card holder information to promotional unit 300 which, in turn, may record this information and provide special discounts and promotions and targeted prices for the items on the shelf to the shopper by transmitting promotional unit data to intermediate unit 800. A single promotional unit 300 could serve multiple customers by using simple techniques to avoid interference such as multiple bands or multiplexing. Promotions, discounts and targeted prices offered by the promotional units appear on the display on the shopper's cart. These promotions may be displayed, for example, in a manner which results in the shopper having to interact with the card reader device in the event he/she is interested in viewing details of these promotions. In this manner, the device can record whether the shopper was interested in promotions on the isle or ignored them.

Whether or not intermediate unit 800 is used, the products associated with the promotional units 200, 300 that communicated with the shopper's individual card 100 may be compared with the products which the shopper's actually purchased. In this way, for example, it is possible to compare the products of which the individual was aware with the products which the customer actually purchased.

Although the invention is illustrated and described herein with reference to specific embodiments, the invention is not intended to be limited to the details shown. Rather, various modifications may be made in the details within the scope and range of equivalents of the claims and without departing from the invention.

## Claims

1. A system for collecting information associated with movement of shoppers between locations in a retail complex, comprising:
a plurality of individual cards (100), each of said individual cards (100) corresponding to a respective one of said shoppers, each of said cards (100) including a respective storage area (105) and a respective interactor (110,115) for receiving promotional unit data and for transferring said received promotional unit data to said respective storage area (105) as a respective one of said shoppers moves their respective card (100) between locations;
a plurality of promotional units (200), each transmitting respective promotional unit data comprising data identifying the promotional unit (200) or its location to any of said cards (100), said respective promotional unit data transmitted by said respective one of said promotional units (200), and received by any one of said cards (100), when said any one of said cards (100) and said respective one of said promotional units (200) are brought in proximity by one of said shoppers for communications between them to occur; and
an administrative unit (400) for receiving all of said promotional unit data situated in said respective storage area (105) of any one of said cards (100).

2. A system as claimed in claim 1, wherein said any one of said cards stores in said respective storage area a time when said respective storage area receives said respective promotional unit data.

3. A system as claimed in claim 1, wherein each storage area includes a state variable which is modified responsive to one of said promotional units communicating with said respective one of said cards.

4. A system as claimed in claim 1, wherein said one of said promotional units communicates with said respective one of said cards to modify said state variable responsive to human interaction with said one of said promotional units.

5. A system as claimed in claim 3, wherein said respective one of said promotional units communicates with any one of said cards responsive to said any one of said cards communicating with said respective one of said promotional units.

6. A system as claimed in claim 3, wherein said state variable is modified based on which of said promotional units said respective one of said cards communicates with.

7. A system as claimed in claim 1, further comprising a further administrative unit for dispensing said cards to a plurality of shoppers, respectively, each card uniquely identifying a respective one of said shoppers.

8. A system as claimed in claim 1, further comprising a further administrative unit for one of initializing and modifying said cards.

9. A system as claimed in claim 1, wherein each of said promotional units is associated with a plurality of products, respectively, further comprising means for comparing at least a portion of said promotional unit data stored in one of said cards with ones of said products acquired by a shopper.

10. A system as claimed in claim 1, wherein said interactor is a direct interactor which makes physical contact with ones of said promotional units in order to communicate.

11. A system as claimed in claim 1, wherein said interactor is a wireless interactor which communicates with ones of said promotional units over a wireless medium.

12. A system as claimed in claim 1, wherein ones of said promotional units are standalone and disconnected one from another.

13. A system as claimed in claim 1, wherein one of said promotional units provides a response based on what promotional unit data is stored in said respective storage area.

14. A system as claimed in claim 3, wherein one of said promotional units provides a response based on said state variable.

15. A system as claimed in claim 1, wherein communicating with ones of said promotional units provides a monetary realization to said shopper.

16. A system as claimed in claim 1, further comprising an intermediate unit, wherein one of said cards and ones of said promotional units communicate through said intermediate unit.

17. A system as claimed in claim 1, further comprising a further administrative unit for statistically analyzing said promotional unit data stored in ones of said cards to identify correlations based on said data.

18. A system as claimed in claim 1, further comprising a further unit for analyzing said data received by said administrative unit to obtain information associated with movement of said shoppers.

19. A system as claimed in claim 18, wherein said information obtained corresponds to products acquired and not acquired by said shoppers.

20. A method for collecting information associated with movement of shoppers between locations in a retail complex, said locations having respective promotional units (200), said method comprising the steps of:
providing a plurality of individual cards (100) each having a respective storage area (105) to said shoppers;
having any one of said promotional units (200) provide respective promotional unit data, said promotional unit data comprising data identifying the promotional unit (200) or its location, to any one of said cards (100) which said shoppers cause to interact therewith as said shoppers move through said retail complex and storing said respective promotional unit data in said respective storage area (105) of said respective one of said cards (100); and
receiving said respective promotional unit data from respective ones of said cards (100).

21. A method as claimed in claim 20, further comprising the step of storing respective times of when respective ones of said cards receives promotional unit data.

22. A method as claimed in claim 20, wherein each respective storage area includes a respective state variable, further comprising the step of modifying said state variable responsive to interaction with one of said promotional units.

23. A method as claimed in claim 20, wherein each respective storage area includes a respective state variable, further comprising the step of modifying said state variable responsive to human interaction with one of said promotional units.

24. A method as claimed in claim 20, further comprising the step of one of said promotional units communicating with one of said cards responsive to one of said cards communicating with one of said promotional units.

25. A method as claimed in claim 20, wherein one of said cards includes a state variable, further comprising the step of modifying said state variable based on which of said promotional units said respective one of said cards communicates with.

26. A method as claimed in claim 20, further comprising the step of comparing at least a portion of said promotional unit data stored in ones of said cards with products acquired by a shopper.

27. A method as claimed in claim 20, further comprising the step of providing a monetary realization after one of said cards and one of said promotional units have communicated.

28. A method as claimed in claim 20, wherein said promotional unit data is transmitted from ones of said promotional units to one of said cards through an intermediate unit.

29. A method as claimed in claim 20, further comprising the step of statistically analyzing said promotional unit data stored in said cards to identify correlations based on said data.

30. A method as claimed in claim 20, wherein said data received by said administrative unit is analyzed to obtain information associated with movement of said shoppers.

31. A method as claimed in claim 30, wherein said information obtained corresponds to products acquired and not acquired by said shoppers.

32. A computer program product comprising a computer usable medium having computer readable program code means embodied therein for causing a collection of information associated with movement of shoppers between locations in a retail complex, said locations having respective promotional units, computer readable program code means in said computer program product comprising computer readable program code means for causing a computer to effect a method as claimed in any of claims 20 to 31.

## Patentansprüche

1. System zur Erfassung von Informationen in Verbindung mit der Bewegung von Kunden zwischen Standorten in einem Einkaufszentrum, das Folgendes umfasst:
eine Vielzahl von einzelnen Karten (100), wobei jede der einzelnen Karten (100) einem jeweiligen der Kunden entspricht, wobei jede der Karten (100) einen entsprechenden Speicherbereich (105) und einen entsprechenden Interaktor (110, 115) umfasst, um Werbeaktionseinheit-Daten zu empfangen und um die empfangenen Werbeaktionseinheit-Daten an den entsprechenden Speicherbereich (105) zu übertragen, wenn ein entsprechender der Kunden seine entsprechende Karte (100) zwischen Standorten bewegt;
eine Vielzahl von Werbeaktionseinheiten (200), von denen jede entsprechende Werbeaktionseinheit-Daten überträgt, die Daten umfassen, welche die Werbeaktionseinheit (200) oder deren Standort beliebigen der Karten (100) gegenüber ausweisen, wobei die entsprechenden Werbeaktionseinheit-Daten von der entsprechenden der Werbeaktionseinheiten (200) übertragen und von einer beliebigen der Karten (100) empfangen werden, wenn die beliebige der Karten (100) von einem der Kunden in unmittelbare Nähe von der entsprechenden der Werbeaktionseinheiten (200) gebracht wird, damit zwischen ihnen Übertragungen stattfinden; und
eine Verwaltungseinheit (400), um alle
Werbeaktionseinheit-Daten zu empfangen, die sich in dem entsprechenden Speicherbereich (105) einer beliebigen der Karten (100) befinden.

2. System nach Anspruch 1, wobei die beliebige der Karten in dem entsprechenden Speicherbereich einen Zeitpunkt speichert, zu dem der entsprechende Speicherbereich die entsprechenden Werbeaktionseinheit-Daten empfängt.

3. System nach Anspruch 1, wobei jeder Speicherbereich eine Zustandsvariable enthält, die als Antwort darauf geändert wird, dass eine der Werbeaktionseinheiten mit der entsprechenden der Karten kommuniziert.

4. System nach Anspruch 1, wobei die eine der Werbeaktionseinheiten mit der entsprechenden der Karten kommuniziert, um die Zustandsvariable als Antwort darauf zu ändern, dass eine Person mit der einen der Werbeaktionseinheiten interaktiv kommuniziert.

5. System nach Anspruch 3, wobei die entsprechende der Werbeaktionseinheiten mit einer beliebigen der Karten als Antwort darauf kommuniziert, dass die beliebige der Karten mit der entsprechenden der Werbeaktionseinheiten kommuniziert.

6. System nach Anspruch 3, wobei die Zustandsvariable auf der Grundlage dessen geändert wird, mit welcher der Werbeaktionseinheiten die entsprechende der Karten kommuniziert.

7. System nach Anspruch 1, das ferner eine weitere Verwaltungseinheit umfasst, um die Karten an jeweils eine Vielzahl von Kunden auszugeben, wobei jede Karte einen entsprechenden der Kunden eindeutig ausweist.

8. System nach Anspruch 1, das ferner eine weitere Verwaltungseinheit umfasst, um die Karten zu initialisieren und zu ändern.

9. System nach Anspruch 1, wobei jede der Werbeaktionseinheiten zu jeweils einer Vielzahl von Produkten gehört, wobei das System des Weiteren ein Mittel umfasst, um mindestens einen Teil der Werbeaktionseinheit-Daten, die auf einer der Karten gespeichert sind, mit einzelnen der von einem Kunden erworbenen Produkte zu vergleichen.

10. System nach Anspruch 1, wobei der Interaktor ein direkter Interaktor ist, der mit einzelnen der Werbeaktionseinheiten physisch in Kontakt tritt, um zu kommunizieren.

11. System nach Anspruch 1, wobei der Interaktor ein drahtloser Interaktor ist, der über ein drahtloses Medium mit einzelnen der Werbeaktionseinheiten kommuniziert.

12. System nach Anspruch 1, wobei einzelne der Werbeaktionseinheiten eigenständig und voneinander getrennt sind.

13. System nach Anspruch 1, wobei eine der Werbeaktionseinheiten eine Antwort bereitstellt, die auf den jeweiligen Werbeaktionseinheit-Daten beruht, die in dem entsprechenden Speicherbereich gespeichert sind.

14. System nach Anspruch 3, wobei eine der Werbeaktionseinheiten eine Antwort auf der Grundlage der Zustandsvariablen bereitstellt.

15. System nach Anspruch 1, wobei die Kommunikation mit einzelnen der Werbeaktionseinheiten dem Kunden einen Kostenüberblick gibt.

16. System nach Anspruch 1, das des Weiteren eine Zwischeneinheit umfasst, wobei eine der Karten und einzelne der Werbeaktionseinheiten über die Zwischeneinheit kommunizieren.

17. System nach Anspruch 1, das ferner eine weitere Verwaltungseinheit umfasst, um die Werbeaktionseinheit-Daten, die auf einzelnen der Karten gespeichert sind, statistisch auszuwerten, um auf der Grundlage der Daten Korrelationen festzustellen.

18. System nach Anspruch 1, das ferner eine weitere Einheit zur Auswertung der von der Verwaltungseinheit empfangenen Daten umfasst, um Informationen in Verbindung mit der Bewegung der Kunden zu erhalten.

19. System nach Anspruch 18, wobei die erhaltenen Informationen Produkten entsprechen, die von den Kunden erworben und nicht erworben wurden.

20. Verfahren zur Erfassung von Informationen in Verbindung mit der Bewegung von Kunden zwischen Standorten in einem Einkaufszentrum, wobei die Standorte über entsprechende Werbeaktionseinheiten (200) verfügen, wobei das Verfahren die folgenden Schritte umfasst:
Bereitstellen einer Vielzahl von einzelnen Karten (100), von denen jede einen entsprechenden Speicherbereich (105) für die Kunden hat;
Veranlassen, dass einer beliebigen der Karten (100), die auf Veranlassung der Kunden mit einer beliebigen der Werbeaktionseinheiten interaktiv kommunizieren, während sich die Kunden durch das Einkaufszentrum bewegen, entsprechende Werbeaktionseinheit-Daten von der beliebigen der Werbeaktionseinheiten (200) bereitgestellt werden, wobei die Werbeaktionseinheit-Daten Daten umfassen, die die Werbeaktionseinheit (200) oder ihren Standort ausweisen, und Speichern der entsprechenden Werbeaktionseinheit-Daten in dem entsprechenden Speicherbereich (105) der entsprechenden der Karten (100); und
Empfangen der entsprechenden Werbeaktionseinheit-Daten von entsprechenden der Karten (100).

21. Verfahren nach Anspruch 20, das des Weiteren den Schritt der Speicherung von entsprechenden Zeitpunkten umfasst, zu denen entsprechende der Karten Werbeaktionseinheit-Daten empfangen.

22. Verfahren nach Anspruch 20, wobei jeder entsprechende Speicherbereich eine entsprechende Zustandsvariable enthält, wobei das Verfahren des Weiteren den Schritt der Änderung der Zustandsvariablen als Antwort auf die Interaktion mit einer der Werbeaktionseinheiten umfasst.

23. Verfahren nach Anspruch 20, wobei jeder entsprechende Speicherbereich eine entsprechende Zustandsvariable enthält, wobei das Verfahren des Weiteren den Schritt der Änderung der Zustandsvariablen als Antwort darauf, dass eine Person mit einer der Werbeaktionseinheiten interaktiv kommuniziert, umfasst.

24. Verfahren nach Anspruch 20, das des Weiteren den Schritt umfasst, in dem eine der Werbeaktionseinheiten als Antwort darauf, dass eine der Karten mit einer der Werbeaktionseinheiten kommuniziert, mit einer der Karten kommuniziert.

25. Verfahren nach Anspruch 20, wobei eine der Karten eine Zustandsvariable enthält, wobei das Verfahren des Weiteren den Schritt der Änderung der Zustandsvariablen auf der Grundlage dessen, mit welcher der Werbeaktionseinheiten die entsprechende der Karten kommuniziert, umfasst.

26. Verfahren nach Anspruch 20, das des Weiteren den Schritt des Vergleichens von mindestens einem Teil der Werbeaktionseinheit-Daten, die auf einzelnen der Karten gespeichert sind, mit Produkten, die von einem Kunden erworben wurden, umfasst.

27. Verfahren nach Anspruch 20, das des Weiteren den Schritt der Bereitstellung eines Kostenüberblicks umfasst, nachdem eine der Karten und eine der Werbeaktionseinheiten miteinander kommuniziert haben.

28. Verfahren nach Anspruch 20, wobei die Werbeaktionseinheit-Daten von einzelnen der Werbeaktionseinheiten über eine Zwischeneinheit an eine der Karten übertragen werden.

29. Verfahren nach Anspruch 20, das des Weiteren den Schritt der statistischen Auswertung der Werbeaktionseinheit-Daten umfasst, die auf den Karten gespeichert sind, um auf der Grundlage der Daten Korrelationen festzustellen.

30. Verfahren nach Anspruch 20, wobei die von der Verwaltungseinheit empfangenen Daten ausgewertet werden, um Informationen in Verbindung mit der Bewegung der Kunden zu erhalten.

31. Verfahren nach Anspruch 30, wobei die erhaltenen Informationen Produkten entsprechen, die von den Kunden erworben und nicht erworben wurden.

32. Rechnerprogrammprodukt, das ein von einem Rechner verwendbaren Datenträger umfasst und in dem ein rechnerlesbares Programmcodemittel enthalten ist, um die Erfassung von Informationen in Verbindung mit der Bewegung von Kunden zwischen Standorten in einem Einkaufszentrum zu veranlassen, wobei die Standorte über entsprechende Werbeaktionseinheiten verfügen, wobei das rechnerlesbare Programmcodemittel in dem Rechnerprogrammprodukt ein rechnerlesbares Programmcodemittel umfasst, um einen Rechner zur Durchführung eines Verfahrens nach einem der Ansprüche 20 bis 31 zu veranlassen.

## Revendications

1. Système pour collecter de l'information associée à un mouvement d'acheteurs entre des emplacements dans un complexe de vente, comprenant :
une pluralité de cartes individuelles (100), chacune desdites cartes individuelles (100) correspondant a un desdits acheteurs respectif, chacune desdites cartes (100) comportant une zone de mémoire respective (105) et un interacteur respectif (110,115) servant à recevoir des données d'unité promotionnelle et à transférer lesdites données d'unité promotionnelle vers ladite zone de mémoire respective (105) lorsque l'un desdits acheteurs respectif déplace sa carte respective (100) entre des emplacements;
une pluralité d'unités promotionnelles (200), chacune transmettant à l'une quelconque desdites cartes (100) des données d'unité promotionnelle respectives comprenant des données identifiant l'unité promotionnelle (200) ou son emplacement, lesdites données d'unité promotionnelle respectives étant transmises par ladite unité promotionnelle respective (200) et reçues par l'une quelconque desdites cartes (100), quand ladite carte quelconque (100) et ladite unité promotionnelle respective (200) sont rapprochées par l'un desdits acheteurs pour qu'elles puissent communiquer ; et
une unité administrative (400) servant à recevoir l'ensemble desdites données d'unité promotionnelle situées dans ladite zone de mémoire respective (105) de l'une quelconque desdites cartes (100).

2. Système selon la revendication 1, où ladite carte quelconque parmi lesdites cartes enregistre dans ladite zone de mémoire l'heure à laquelle ladite zone de mémoire a reçu les dites données d'unité promotionnelle respective.

3. Système selon la revendication 1, où chaque zone de mémoire inclut une variable d'état qui est modifiée en réponse à une communication de l'une desdites unités promotionnelles avec ladite carte respective.

4. Système selon la revendication 1, où ladite unité promotionnelle parmi lesdites unités promotionnelles communique avec ladite carte respective parmi lesdites cartes, dans le but de modifier ladite variable d'état en réponse à une interaction humaine avec ladite unité promotionnelle parmi lesdites unités promotionnelles.

5. Système selon la revendication 3, où ladite unité respective parmi lesdites unités promotionnelles communique avec l'une quelconque desdites cartes en réponse à la communication de ladite une quelconque desdites cartes avec ladite unité respective parmi lesdites unités promotionnelles.

6. Système selon la revendication 3, où ladite variable d'état est modifiée en fonction de celle desdites unités promotionnelles avec laquelle communique ladite carte respective parmi lesdites cartes.

7. Système selon la revendication 1, comportant en outre une autre unité administrative pour distribuer respectivement lesdites cartes à une pluralité d'acheteurs, chaque carte identifiant univoquement un desdits acheteurs respectif.

8. Système selon la revendication 1, comprenant en outre une autre unité administrative servant à initialiser ou à modifier lesdites cartes.

9. Système selon la revendication 1, où chacune desdites unités promotionnelles est respectivement associée à une pluralité de produits, comprenant en outre un moyen pour comparer au moins une partie desdites données d'unité promotionnelle enregistrées dans l'une desdites cartes avec lesdits produits individuels acquis par un acheteur.

10. Système selon la revendication 1, où ledit interacteur est un interacteur direct qui doit entrer en contact physique avec lesdites unités promotionnelles individuelles pour communiquer.

11. Système selon la revendication 1, où ledit interacteur est un interacteur sans fil qui communique avec lesdites unités promotionnelles individuelles au moyen d'un support sans fil.

12. Système selon la revendication 1, où lesdites unités promotionnelles individuelles sont détachées et ne sont pas reliées les unes aux autres.

13. Système selon la revendication 1, où l'une desdites unités promotionnelles donne une réponse basée sur les données d'unité promotionnelle qui sont enregistrées dans ladite zone de mémoire respective.

14. Système selon la revendication 3, où l'une desdites unités promotionnelles donne une réponse basée sur ladite variable d'état.

15. Système selon la revendication 1, où une communication avec lesdites unités promotionnelles individuelles donne un avantage monétaire audit acheteur.

16. Système selon la revendication 1, comprenant en outre une unité intermédiaire, où une desdites cartes et lesdites unités promotionnelles individuelles communiquent par le biais de ladite unité intermédiaire.

17. Système selon la revendication 1, comprenant en outre une autre unité administrative servant à l'analyse statistique desdites données d'unité promotionnelle enregistrées dans lesdites cartes individuelles pour identifier les corrélations sur la base desdites données.

18. Système selon la revendication 1, comprenant en outre une autre unité pour analyser lesdites données reçues par ladite unité administrative afin d'obtenir de l'information associée au mouvement desdits acheteurs.

19. Système selon la revendication 18, où ladite information obtenue correspond aux produits acquis et à ceux non acquis par lesdits acheteurs.

20. Procédé pour collecter de l'information associée à un mouvement d'acheteurs entre des emplacements dans un complexe de vente, lesdits emplacements comportant des unités promotionnelles respectives (200), ledit procédé comprenant les phases qui consistent à :
fournir une pluralité de cartes individuelles (100) auxdits acheteurs, comportant chacune une zone de mémoire respective (105) ;
faire fournir, par l'une quelconque desdites unités promotionnelles (200), à l'une quelconque desdites cartes (100) que lesdits acheteurs font interagir avec elle quand ils se déplacent dans ledit complexe de vente, des données d'unité promotionnelle respective, lesdites données d'unité promotionnelle respective comprenant des données identifiant l'unité promotionnelle (200) ou son emplacement, et enregistrer lesdites données d'unité promotionnelle respective dans ladite zone de mémoire respective (105) de ladite carte respective (100) ; et
recevoir lesdites données d'unité promotionnelle respective provenant desdites cartes individuelles respectives (100).

21. Procédé selon la revendication 20, comprenant en outre la phase qui consiste à enregistrer les heures respectives auxquelles lesdites cartes individuelles respectives reçoivent les données d'unité promotionnelle.

22. Procédé selon la revendication 20, où chaque zone de mémoire inclut une variable d'état respective, comprenant en outre la phase qui consiste à modifier ladite variable d'état en réponse à une interaction avec l'une desdites unités promotionnelles.

23. Procédé selon la revendication 20, où chaque zone de mémoire inclut une variable d'état respective, comprenant en outre la phase qui consiste à modifier ladite variable d'état en réponse à une interaction humaine avec l'une desdites unités promotionnelles.

24. Procédé selon la revendication 20, comprenant en outre la phase où l'une desdites unités promotionnelles communique avec l'une desdites cartes en réponse à la communication de l'une desdites cartes avec l'une desdites unités promotionnelles.

25. Procédé selon la revendication 20, où l'une desdites cartes comprend une variable d'état, comprenant en outre la phase qui consiste à modifier ladite variable d'état en fonction de celle desdites unités promotionnelles avec laquelle communique ladite carte respective parmi lesdites cartes.

26. Procédé selon la revendication 20, comprenant en outre la phase qui consiste comparer au moins une partie desdites données d'unité promotionnelle enregistrées dans lesdites cartes individuelles avec les produits acquis par un acheteur.

27. Procédé selon la revendication 20, comprenant en outre la phase qui consiste à procurer un avantage monétaire audit acheteur après que l'une desdites cartes et l'une desdites unités promotionnelles ont communiqué.

28. Procédé selon la revendication 20 où lesdites données d'unité promotionnelle sont transmises desdites unités promotionnelles individuelles à l'une desdites cartes par le biais d'une unité intermédiaire.

29. Procédé selon la revendication 20, comprenant en outre la phase qui consiste à analyser statistiquement lesdites données d'unité promotionnelle enregistrées dans lesdites cartes individuelles pour identifier les corrélations sur la base desdites données.

30. Procédé selon la revendication 20, où lesdites données reçues par ladite unité administrative sont analysées afin d'obtenir une information associée au déplacement desdits acheteurs.

31. Procédé selon la revendication 20, où ladite information obtenue correspond aux produits acquis et à ceux non acquis par lesdits acheteurs.

32. Programme informatique comprenant un support utilisable par ordinateur dans lequel est installé un moyen à code de programme lisible par ordinateur servant à collecter de l'information associée au mouvement d'acheteurs entre des emplacements dans un complexe de vente, lesdits emplacements comportant des unités promotionnelles respectives, le moyen à code de programme lisible par ordinateur dans ledit programme informatique comprenant un code de programme lisible par ordinateur servant à faire effectuer par l'ordinateur un procédé tel que revendiqué dans l'une quelconque des revendications 20 à 31.
